# EUROPÄISCHE PATENTSCHRIFT

(11) **EP 3 892 936 B1**
(45) Veröffentlichungstag und Bekanntmachung des Hinweises auf die Patenterteilung: **14.12.2022**
(21) Anmeldenummer: 21166505.4
(22) Anmeldetag: 01.04.2021
(51) Int. Cl.: F24H 8/00

(54) **VERFAHREN ZUM BETRIEB EINER HEIZUNGSANLAGE**
METHOD FOR OPERATING A HEATING ASSEMBLY
PROCÉDÉ DE FONCTIONNEMENT D'UNE INSTALLATION DE CHAUFFAGE

(30) Priorität: 08.04.2020 DE 102020109828
(43) Veröffentlichungstag der Anmeldung: 13.10.2021
(73) Patentinhaber: Viessmann Climate Solutions SE, 35108 Allendorf (DE)
(72) Erfinder: Wieser, Christian, 35083 Wetter (DE); Böcke, Jannik, 35232 Dautphetal (DE); Görge, Gunthard, 35260 Stadtallendorf (DE)
(74) Vertreter: Wolf, Michael

(56) Entgegenhaltungen:
- EP-A1- 2 853 840
- EP-A2- 1 762 791
- KR-A- 20140 040 915
- US-A1- 2018 347 856

## Beschreibung

Die Erfindung betrifft ein Verfahren zum Betrieb einer Heizungsanlage gemäß dem Oberbegriff des Patentanspruchs 1.

Ein Verfahren der eingangs genannten Art ist aus dem Dokument DE 20 2008 008 971 U1 bekannt. Bei diesem wird mit einem Brenner eines Heizkessels ein Brennstoff verbrannt, eine Brennerleistung des Brenners mit einer Regelungseinrichtung geregelt, beim Verbrennen des Brennstoffs anfallendes Kondensat einem ein Fall- und ein Steigrohr aufweisenden Kondensatsiphon zugeführt und ein Kondensatfüllstand des Kondensatsiphons mit einem Sensor erfasst. Außerdem werden der vom Sensor erfasste Kondensatfüllstand und (was nicht explizit offenbart, aber wie der Fachmann weiß, praktisch der Fall ist) eine erfasste Außentemperatur an die Regelungseinrichtung übertragen. Bei dieser Lösung geht es darum, eine eventuell auftretende Verstopfung des Kondensatsiphons zu erfassen.

Ein Verfahren gemäß dem Oberbegriff des Patentanspruchs 1 ist ebenfalls aus EP 1 762 791 A1 bekannt.

Der Erfindung liegt die Aufgabe zugrunde, ein Verfahren der eingangs genannten Art zu verbessern. Insbesondere soll die Betriebssicherheit der typischerweise in einem Gebäude aufgestellten Heizungsanlage weiter verbessert werden, und zwar bei möglichst kurzem Kondensatsiphon.

Diese Aufgabe ist mit einem Verfahren zum Betrieb einer Heizungsanlage durch die im Kennzeichen des Patentanspruchs 1 aufgeführten Merkmale gelöst.

Nach der Erfindung ist also vorgesehen, dass ein Außentemperaturgrenzwert vorgegeben und mit der (außerhalb des Gebäudes) erfassten Außentemperatur verglichen wird, und dass bei absinkendem Kondensatfüllstand im Fallrohr und bei Erreichen eines vorgegebenen Kondensatmindestfüllstands bei einer Außentemperatur oberhalb des Außentemperaturgrenzwertes die Brennerleistung des Brenners reduziert oder bei einer Außentemperatur unterhalb des Außentemperaturgrenzwertes eine Differenz zwischen Vor- und Rücklauftemperatur des Heizkessels vergrößert wird.

Mit anderen Worten zeichnet sich das erfindungsgemäße Verfahren somit dadurch aus, dass in Abhängigkeit von der Außentemperatur auf ein Absinken des Kondensatfüllstandes im Kondensatsiphon wahlweise die Brennerleistung reduziert oder die Differenz zwischen Vor- und Rücklauftemperatur vergrößert wird. Die erste Option geht dabei insbesondere von einer Verstopfung zum Beispiel wegen eines Vogels im Abgaskanal des Heizkessels aus, die dazu führt, dass der Druck im Heizkessel ansteigt und damit das Kondensat im Siphon nach unten gedrückt wird. In diesem Fall reagiert die Anlage, wie erläutert, mit einer Reduktion der Brennerleistung, notfalls sogar mit einem Abschalten des Brenners. Die zweite, bei niedrigeren Außentemperaturen aktivierte Option geht im Unterschied zur ersten Option insbesondere von einer Vereisung des Abgaskanals aus, der aber nicht durch Reduktion der Brennerleistung, sondern durch Anheben der Differenz zwischen Vor- und Rücklauftemperatur begegnet wird, was, wie der Fachmann weiß, wiederum zu einer Erhöhung der Abgastemperatur und damit vorzugsweise zum Schmelzen der unerwünschten Vereisung führt. Anders als beim vorgenannten Stand der Technik, bei dem es um eine Verstopfung im Kondensatsiphon geht, betrifft die erfindungsgemäße Lösung somit letztlich mögliche Verstopfungen im Abgaskanal der Heizungsanlage, die am Kondensatsiphon und im Zusammenspiel mit der Außentemperatur detektiert werden.

Andere vorteilhafte Weiterbildungen des erfindungsgemäßen Verfahrens zum Betrieb einer Heizungsanlage ergeben sich aus den abhängigen Patentansprüchen.

Das erfindungsgemäße Verfahren zum Betrieb einer Heizungsanlage einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

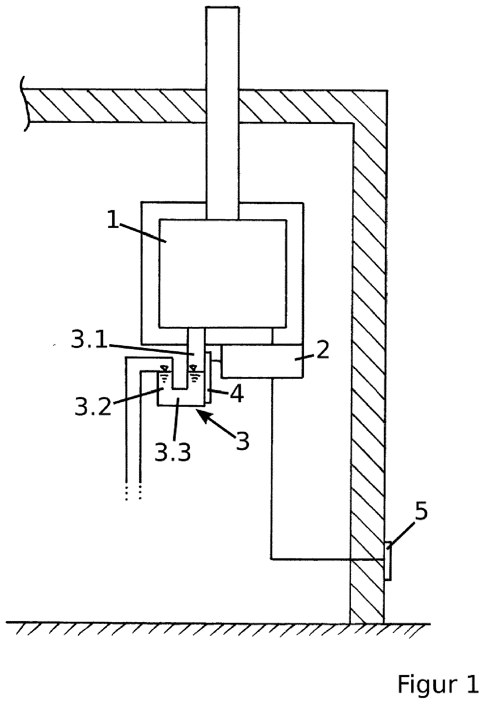

Es zeigt schematisch
- Figur 1: eine Heizungsanlage zur Durchführung des erfindungsgemäßen Verfahrens.

Bei der in Figur 1 dargestellten Heizungsanlage wird in an sich bekannter Weise mit einem Brenner 1 eines Heizkessel ein Brennstoff, insbesondere wahlweise Gas oder Öl, verbrannt. Dabei wird eine Brennerleistung des Brenners 1 mit einer Regelungseinrichtung 2 geregelt. Außerdem wird beim Verbrennen des Brennstoffs anfallendes Kondensat einem ein Fall- und ein Steigrohr 3.1, 3.2 aufweisenden Kondensatsiphon 3 zugeführt.

Beim dargestellten Ausführungsbeispiel ist dabei bevorzugt vorgesehen, dass an einem unteren Ende des Fallrohres 3.1 ein Verbindungsabschnitt 3.3 zu einem unteren Ende des Steigrohres 3.2 angeordnet ist. Über diesen Verbindungsabschnitt 3.3 sind das Fallrohr 3.1 und das Steigrohr 3.2 hydraulisch miteinander verbunden. Alternativ - wie bei der Lösung gemäß dem Dokument DE 20 2008 008 971 U1 - (hier nicht extra dargestellt) kann auch vorgesehen sein, dass das Fallrohr 3.1 mindestens teilweise innerhalb des Steigrohres 3.2 angeordnet ist. Denkbar ist dabei auch grundsätzlich eine entsprechend umgekehrte Lösung.

Bei der in Figur 1 dargestellten Heizungsanlage wird ferner ein Kondensatfüllstand des Kondensatsiphons 3 mit einem Sensor 4 erfasst wird, wobei der vom Sensor 4 erfasste Kondensatfüllstand und außerdem eine vorzugsweise mit einem Außentemperatursensor erfasste Außentemperatur an die Regelungseinrichtung 2 übertragen werden.

Wesentlich für das erfindungsgemäße Verfahren ist nun, dass ein Außentemperaturgrenzwert vorgegeben und mit der erfassten Außentemperatur verglichen wird und dass bei absinkendem Kondensatfüllstand im Fallrohr 3.1 und bei Erreichen eines vorgegebenen Kondensatmindestfüllstands bei einer Außentemperatur oberhalb des Außentemperaturgrenzwertes die Brennerleistung des Brenners 1 reduziert oder bei einer Außentemperatur unterhalb des Außentemperaturgrenzwertes eine Differenz zwischen Vor- und Rücklauftemperatur des Heizkessels vergrößert wird.

Bei einer Außentemperatur unterhalb des Außentemperaturgrenzwertes ist dabei weiterhin besonders bevorzugt vorgesehen, dass die minimale Brennerleistung des Brenners 1 angehoben wird.

Der besagte Außentemperaturgrenzwert liegt unterhalb von -5°C, vorzugsweise unterhalb von -10°C, besonders bevorzugt unterhalb von -20°C.

Dabei ist besonders bevorzugt vorgesehen, dass durch die Erfassung des Kondensatfüllstandes und durch die auf den Heizkessel einwirkende Regelungseinrichtung 2 ein Austritt von Abgas des Brenners 1 durch den Kondensatsiphon 3 verhindert wird. Oder in anderen Worten: Die Regelungseinrichtung 2 wirkt (insbesondere durch Reduktion der Brennerleistung) unter Berücksichtigung des Kondensatfüllstandes derart auf den Heizkessel ein, dass ein Austritt von Abgas des Brenners 1 durch den Kondensatsiphon 3 verhindert wird.

Weiterhin ist besonders bevorzugt, dass durch die Erfassung des Kondensatfüllstandes und durch die auf den Heizkessel einwirkende Regelungseinrichtung 2 ein Kondensatstau bis in eine Brennkammer für den Brenner 1 verhindert wird. Oder in anderen Worten: Die Regelungseinrichtung 2 wirkt (insbesondere durch Abschalten des Brenners) unter Berücksichtigung des Kondensatfüllstandes derart auf den Heizkessel ein, dass ein Kondensatstau bis in eine Brennkammer für den Brenner 1 verhindert wird.

Außerdem ist bevorzugt vorgesehen, dass der Brenner 1 bei Erreichen eines vorgegebenen Kondensatminimalfüllstands abgeschaltet wird. Dieser Kondensatminimalfüllstand liegt dabei unterhalb (also näher am Boden des Aufstellungsraums) des vorerwähnten Kondensatmindestfüllstands.

Um die besagten Funktionen nicht nur sporadisch realisieren zu können, ist ferner besonders bevorzugt vorgesehen, dass der Kondensatfüllstand am Kondensatsiphon 3 während des Betriebs der Heizungsanlage regelmäßig, vorzugsweise dauernd, erfasst wird.

Damit einher gehend, ist im Falle eines tatsächlich eingetretenen Abfalls des Kondensatspiegels besonders bevorzugt vorgesehen, dass nach einer vorgegebenen Zeit überprüft wird, ob der Kondensatfüllstand wieder angestiegen ist.

Weiterhin ist - wie in Figur 1 schematisch angedeutet - bevorzugt vorgesehen, dass der Kondensatfüllstand am Kondensatsiphon 3 mindestens an mehreren Höhenpositionen des Fallrohres 3.1 erfasst wird. Besonders bevorzugt ist vorgesehen, dass der Kondensatfüllstand am Kondensatsiphon 3 millimetergenau erfasst wird. Bei alledem ist besonders bevorzugt vorgesehen, dass der Kondensatfüllstand am Kondensatsiphon 3 kapazitiv mit dem Sensor 4 erfasst wird.

Schließlich ist noch besonders bevorzugt vorgesehen, dass zur Erfassung einer sich aus einer Länge des Abgaskanals des Heizkessels ergebende Druckdifferenz eine Kondensatfüllstandsmessung vor und nach einem Start des Brenners 1 durchgeführt und eine Gebläsedrehzahl des Brenners 1 orientiert an der erfassten Druckdifferenz mit Hilfe der Regelungseinrichtung 2 eingestellt wird.

### Bezugszeichenliste

- 1: Brenner
- 2: Regelungseinrichtung
- 3: Kondensatsiphon
- 3.1: Fallrohr
- 3.2: Steigrohr
- 3.3: Verbindungsabschnitt
- 4: Sensor
- 5: Außentemperatursensor

## Patentansprüche

1. Verfahren zum Betrieb einer Heizungsanlage, bei dem
- mit einem Brenner (1) eines Heizkessels ein Brennstoff verbrannt wird,
- eine Brennerleistung des Brenners (1) mit einer Regelungseinrichtung (2) geregelt wird,
- beim Verbrennen des Brennstoffs anfallendes Kondensat einem ein Fall- und ein Steigrohr (3.1, 3.2) aufweisenden Kondensatsiphon (3) zugeführt wird,
- ein Kondensatfüllstand des Kondensatsiphons (3) mit einem Sensor (4) erfasst wird und
- der vom Sensor (4) erfasste Kondensatfüllstand und eine erfasste Außentemperatur an die Regelungseinrichtung (2) übertragen werden,
**dadurch gekennzeichnet,**
**dass** ein Außentemperaturgrenzwert vorgegeben und mit der erfassten Außentemperatur verglichen wird, und
**dass** bei absinkendem Kondensatfüllstand im Fallrohr (3.1) und bei Erreichen eines vorgegebenen Kondensatmindestfüllstands bei einer Außentemperatur oberhalb des Außentemperaturgrenzwertes die Brennerleistung des Brenners (1) reduziert oder bei einer Außentemperatur unterhalb des Außentemperaturgrenzwertes eine Differenz zwischen Vor- und Rücklauftemperatur des Heizkessels vergrößert wird.

2. Verfahren nach Anspruch 1,
**dadurch gekennzeichnet,**
**dass** bei einer Außentemperatur unterhalb des Außentemperaturgrenzwertes die minimale Brennerleistung des Brenners (1) angehoben wird.

3. Verfahren nach Anspruch 1 oder 2,
**dadurch gekennzeichnet,**
**dass** durch die Erfassung des Kondensatfüllstandes und durch die auf den Heizkessel einwirkende Regelungseinrichtung (2) ein Austritt von Abgas des Brenners (1) durch den Kondensatsiphon (3) verhindert wird.

4. Verfahren nach einem der Ansprüche 1 bis 3,
**dadurch gekennzeichnet,**
**dass** durch die Erfassung des Kondensatfüllstandes und durch die auf den Heizkessel einwirkende Regelungseinrichtung (2) ein Kondensatstau bis in eine Brennkammer für den Brenner (1) verhindert wird.

5. Verfahren nach einem der Ansprüche 1 bis 4,
**dadurch gekennzeichnet,**
**dass** der Kondensatfüllstand am Kondensatsiphon (3) während des Betriebs der Heizungsanlage regelmäßig erfasst wird.

6. Verfahren nach einem der Ansprüche 1 bis 3 und 5,
**dadurch gekennzeichnet,**
**dass** nach einer vorgegebenen Zeit überprüft wird, ob der Kondensatfüllstand wieder angestiegen ist.

7. Verfahren nach einem der Ansprüche 1 bis 6,
**dadurch gekennzeichnet,**
**dass** der Kondensatfüllstand am Kondensatsiphon (3) an mehreren Höhenpositionen des Fallrohres (3.1) erfasst wird.

8. Verfahren nach einem der Ansprüche 1 bis 7,
**dadurch gekennzeichnet,**
**dass** der Brenner (1) bei Erreichen eines vorgegebenen Kondensatminimalfüllstands abgeschaltet wird.

9. Verfahren nach einem der Ansprüche 1 bis 8,
**dadurch gekennzeichnet,**
**dass** der Kondensatfüllstand am Kondensatsiphon (3) kapazitiv mit dem Sensor (4) erfasst wird.

10. Verfahren nach einem der Ansprüche 1 bis 9,
**dadurch gekennzeichnet,**
**dass** zur Erfassung einer sich aus einer Länge des Abgaskanals des Heizkessels ergebende Druckdifferenz eine Kondensatfüllstandsmessung vor und nach einem Start des Brenners (1) durchgeführt und eine Gebläsedrehzahl des Brenners (1) orientiert an der erfassten Druckdifferenz mit Hilfe der Regelungseinrichtung (2) eingestellt wird.

## Claims

1. A method for operating a heating system in which
- a fuel is burned with a burner (1) of a heating boiler,
- a burner output of the burner (1) is controlled by a control device (2),
- condensate produced during combustion of the fuel is fed to a condensate siphon (3) having a down pipe and a riser pipe (3.1, 3.2),
- a condensate filling level of the condensate siphon (3) is detected by a sensor (4), and
- the condensate filling level detected by the sensor (4) and a detected outside temperature are transmitted to the control device (2),
**characterized in that**
an outside temperature limit value is predetermined and compared with the detected outside temperature, and
**in that**, when the condensate filling level in the down pipe (3.1) drops and when a predetermined minimum condensate filling level is reached at an outside temperature above the outside temperature limit value, the burner output of the burner (1) is reduced or, at an outside temperature below the outside temperature limit value, a difference between the flow and return temperatures of the boiler is increased.

2. The method according to claim 1,
**characterized in that**
at an outside temperature below the outside temperature limit value, the minimum burner output of the burner (1) is raised.

3. The method according to claim 1 or 2,
**characterized in that**
due to the detection of the condensate level and the control device (2) acting on the boiler, exhaust gas escaping from the burner (1) through the condensate siphon (3) is prevented.

4. The method according to any one of claims 1 to 3,
**characterized in that**
due to the detection of the condensate level and the control device (2) acting on the boiler, a buildup of condensate up to the inside of the combustion chamber for the burner (1) is prevented.

5. The method according to any one of claims 1 to 4,
**characterized in that**
the condensate filling level at the condensate siphon (3) is regularly detected during operation of the heating system.

6. The method according to any one of claims 1 to 3 and 5,
**characterized in that**
after a predetermined time it is checked whether the condensate filling level has risen again.

7. The method according to any one of claims 1 to 6,
**characterized in that**
the condensate filling level at the condensate siphon (3) is detected at a plurality of height positions of the down pipe (3.1).

8. The method according to any one of claims 1 to 7,
**characterized in that**
upon reaching a predetermined minimum condensate filling level, the burner (1) is switched off.

9. The method according to any one of claims 1 to 8,
**characterized in that**
the condensate filling level at the condensate siphon (3) is detected capacitively with the sensor (4).

10. The method according to any one of claims 1 to 9,
**characterized in that**
for detecting a pressure difference resulting from a length of the exhaust gas duct of the boiler, a condensate filling level measurement is carried out before and after a start of the burner (1), and a fan speed of the burner (1) is set based on the detected pressure difference with the aid of the control device (2).

## Revendications

1. Procédé d'exploitation d'une installation de chauffage, dans lequel
- un combustible est brûlé avec un brûleur (1) d'une chaudière,
- une puissance du brûleur (1) est réglée avec un dispositif de réglage (2),
- du condensat produit lors de la combustion du combustible est dirigé vers un siphon à condensat (3) présentant un tube de descente et un tube de montée (3.1, 3.2),
- un niveau de condensat du siphon à condensat (3) est détecté avec un capteur (4) et
- le niveau de condensat détecté par le capteur (4) et une température extérieure détectée sont transmis au dispositif de réglage (2),
**caractérisé en ce**
**qu'**une valeur limite de température extérieure est prédéfinie et comparée à la température extérieure détectée, et
**que** si le niveau de condensat baisse dans le tube de descente (3.1) et qu'un niveau minimal de condensat prédéfini est atteint à une température extérieure au-dessus de la valeur limite de température extérieure, la puissance du brûleur (1) est réduite, ou en cas de température extérieure en-dessous de la valeur limite de température extérieure, une différence entre la température montante et la température descendante de la chaudière est augmentée.

2. Procédé selon la revendication 1,
**caractérisé en ce**
**qu'**en cas d'une température extérieure en-dessous de la valeur limite de température extérieure, la puissance minimale du brûleur (1) est relevée.

3. Procédé selon la revendication 1 ou 2,
**caractérisé en ce**
**qu'**une sortie de gaz d'échappement du brûleur (1) à travers le siphon à condensat (3) est empêchée par la détection du niveau de condensat et par le dispositif de réglage (2) agissant sur la chaudière.

4. Procédé selon l'une des revendications 1 à 3,
**caractérisé en ce**
**qu'**une hausse de condensat jusque dans une chambre de combustion du brûleur (1) est évitée par la détection du niveau de condensat et par le dispositif de réglage (2) agissant sur la chaudière.

5. Procédé selon l'une des revendications 1 à 4,
**caractérisé en ce**
**que** le niveau de condensat sur le siphon de condensat (3) est détecté régulièrement pendant le fonctionnement de l'installation de chauffage.

6. Procédé selon l'une des revendications 1 à 3 et 5, **caractérisé en ce**
**qu'**après une durée prédéfinie, il est vérifié si le niveau de condensat est remonté.

7. Procédé selon l'une des revendications 1 à 6,
**caractérisé en ce**
**que** le niveau de condensat sur le siphon de condensat (3) est détecté à plusieurs positions en hauteur du tube de descente (3.1).

8. Procédé selon l'une des revendications 1 à 7,
**caractérisé en ce**
**que** le brûleur (1) est coupé lorsqu'un niveau de condensat minimal prédéfini est atteint.

9. Procédé selon l'une des revendications 1 à 8,
**caractérisé en ce**
**que** le niveau de condensat sur le siphon de condensat (3) est détecté de manière capacitive avec le capteur (4).

10. Procédé selon l'une des revendications 1 à 9,
**caractérisé en ce**
**que** pour détecter une différence de pression due à une longueur du canal de gaz d'échappement, une mesure de niveau de condensat est réalisée avant et après un démarrage du brûleur (1) et une vitesse de soufflante du brûleur (1) est réglée en étant orientée sur la différence de pression détectée à l'aide du dispositif de réglage (2).
